# FASCICULE DE BREVET EUROPEEN

(11) **EP 1 115 987 B1**
(45) Date de publication et mention de la délivrance du brevet: **14.04.2004**
(21) Numéro de dépôt: 99941727.2
(22) Date de dépôt: 09.09.1999
(51) Int. Cl.: F16D 65/56

(54) **FREIN A TAMBOUR UTILISANT UN RATTRAPAGE AUTOMATIQUE DE JEU A INHIBITION SELECTIVE**
AUTOMATISCHE SPIELNACHSTELLVORRICHTUNG FÜR TROMMELBREMSEN MIT FALLWEISER VERHINDERUNG DER NACHSTELLUNG
DRUM BRAKE USING AUTOMATIC SEAL WEAR ADJUSTMENT WITH SELECTIVE INHIBITION

(30) Priorité: 23.09.1998 FR 9811904
(43) Date de publication de la demande: 18.07.2001
(73) Titulaire: Bosch Systemes de Freinage, 93700 Drancy (FR)
(72) Inventeur: DUPUIS, Vincent, F-94300 Vincennes (FR)
(74) Mandataire: Hurwic, Aleksander Wiktor
(86) Numéro de dépôt international: PCT/FR1999/002146
(87) Numéro de publication internationale: WO 2000/017538

(56) Documents cités:
- EP-A- 0 575 825
- FR-A- 2 457 415

## Description

La présente invention concerne les freins à tambour du type de ceux qui sont dotés d'un mécanisme de rattrapage automatique de jeu, propre à compenser l'usure des garnitures de friction.

Plus précisément, l'invention concerne un frein à tambour comprenant au moins : un tambour; deux segments en arc de cercle disposés en regard d'une face interne du tambour et portant des garnitures de friction respectives; un actionneur interposé entre les segments et sélectivement commandé pour déplacer les segments, suivant un mouvement centrifuge, en direction de la face interne du tambour; un ressort reliant les segments pour les rapprocher l'un de l'autre, suivant un mouvement centripète contraire au mouvement centrifuge, dès que l'actionneur cesse d'être commandé; un levier basculant portant une lame de réglage et animé d'un mouvement angulaire alternatif constitué de deux pivotements de directions contraires, corrélés aux mouvements centrifuge et centripète des segments; une entretoise de longueur réglable, interposée entre les segments pour limiter leur mouvement centripète, et comprenant deux éléments filetés formant une liaison vis-écrou, la longueur de cette entretoise étant ajustée par dévissage de la liaison vis-écrou au fur et à mesure que les garnitures de friction s'usent; et une roue dentée, solidaire d'un des éléments de la liaison vis-écrou, et sélectivement entraînée en rotation par la lame de réglage lors d'un premier des pivotements du levier basculant, la lame de réglage s'étendant, en longueur, transversalement par rapport à la roue dentée, se développant en largeur dans un plan moyen parallèle au premier pivotement, et abordant la roue dentée, lors du premier pivotement, de façon relativement plus tangentielle que radiale.

Ce type de freins à tambour est bien connu de l'homme de l'art et par exemple illustré dans le brevet US 4 502 574, dont l'enseignement est incorporé à la présente description.

Malgré l'intérêt qu'ils présentent en raison de la simplicité de leur structure, de tels freins ont parfois tendance à se bloquer lorsqu'ils sont soumis à une force d'actionnement trop importante, en particulier s'ils ont été utilisés dans des conditions extrêmes ayant conduit à une forte élévation de température.

Il est également connu du dossier FR 2457415, un frein à tambour tel que précédemment décrit dont le levier porte une lame d'inhibition s'étendant en longueur parallèlement à la lame de réglage, flexible transversalement par rapport à son plan, adoptant dans son plan (XY) une position de repos dont elle peut s'écarter élastiquement par des débattements d'amplitude limitée suivant sa largeur, et interceptant sélectivement la roue dentée la lame de réglage suivant les débattements de la lame d'inhibition. Cependant, le dispositif de rattrapage de jeu est de taille importante.

Dans ce contexte, la présente invention a pour but de proposer un frein à tambour de ce type comportant un dispositif de rattrapage de jeu sûr et d'un encombrement faible.

Plus précisément, le frein à tambour de l'invention, par ailleurs conforme à la définition qu'en donne le préambule ci-dessus, est essentiellement caractérisé en ce que ladite lame d'inhibition se développe en largeur dans un plan (XY) sensiblement perpendiculaire au plan moyen (XZ) de la lame de réglage, et en ce que la roue dentée échappe à la lame de réglage lorsqu'elle entraîne la lame d'inhibition après avoir été interceptée par cette lame d'inhibition.

Selon un mode de réalisation avantageux de l'invention, la lame d'inhibition est constituée par un bilame et se rapproche de la roue dentée, par un mouvement transversal par rapport à son plan, lors d'une élévation de température.

Le levier peut par exemple présenter une branche disposée en équerre par rapport à la lame de réglage et rattachée à elle par une base commune, cette branche étant d'une part montée pivotante, par une extrémité distante de la base, sur un axe solidaire d'un des segments, d'autre part montée pivotante, par une extrémité adjacente à la base, sur une extrémité de l'entretoise, et le ressort prenant appui sur un point de la branche, intermédiaire entre les extrémités de cette branche.

Enfin, le levier présente de préférence un pli, adjacent à la base commune à la lame de réglage et à la branche, parallèle au plan de la lame d'inhibition, et duquel la lame d'inhibition est rendue solidaire.

D'autres caractéristiques et avantages de l'invention ressortiront clairement de la description qui en est faite ci-après, à titre indicatif et nullement limitatif, en référence aux dessins annexés, dans lesquels:
La figure 1 est une vue de face simplifiée du frein à tambour décrit et illustré dans le brevet précité, et auquel la présente invention peut s'appliquer;
La figure 2 est une vue en perspective d'une partie de l'entretoise d'un frein conforme à l'invention, et par laquelle un tel frein se distingue du frein connu de la figure 1; et
La figure 3, composée des vues 3A à 3F, illustre différentes configurations de fonctionnement du frein de l'invention.

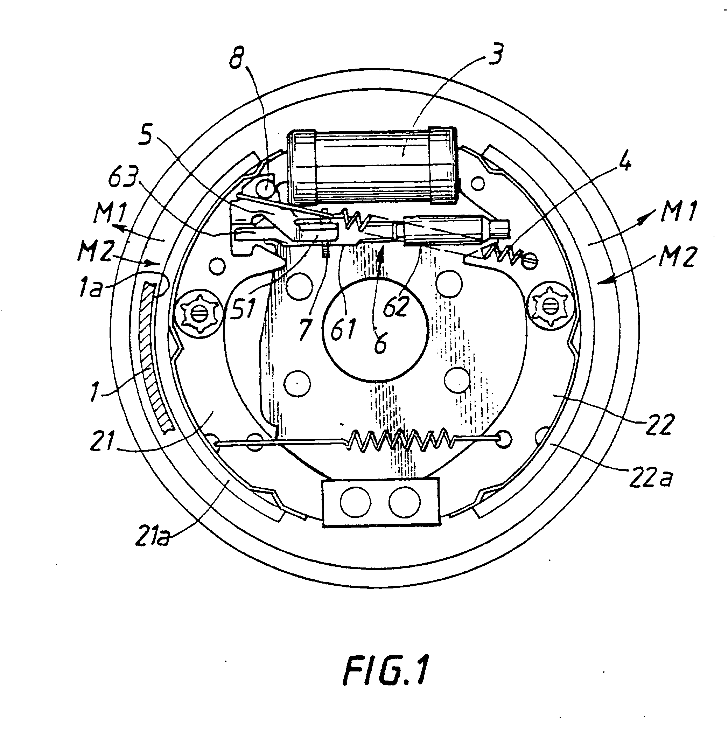

L'invention concerne un frein à tambour du type de ceux qui, comme le montre la figure 1, comprennent principalement un tambour 1; deux segments en arc de cercle 21, 22, portant des garnitures de friction respectives 21a, 22a; un actionneur 3; un ressort 4; un levier basculant 5; une entretoise 6, de longueur réglable; et une roue dentée 7, sélectivement entraînée en rotation pour provoquer l'allongement de l'entretoise 6 en fonction de l'usure des garnitures 2 1a et 22a.

Les deux segments 21, 22 sont disposés en regard d'une face interne 1a du tambour 1 et sont tirés l'un vers l'autre par le ressort 4.

L'actionneur 3, interposé entre les segments 21, 22, est sélectivement commandé pour déplacer les segments, suivant un mouvement centrifuge M1, en direction de la face interne la du tambour, le ressort 4 ayant donc pour effet de rapprocher l'un de l'autre les segments 21, 22, suivant un mouvement centripète M2 contraire au mouvement centrifuge M1, dès que l'actionneur 3 cesse d'être commandé.

Le levier basculant 5 porte une lame de réglage 51 et pivote, autour d'un axe 8, dans un premier sens lorsque segments s'écartent l'un de l'autre suivant leur mouvement centrifuge M1, et dans un second sens, inverse du premier, lorsque segments se rapprochent l'un de l'autre suivant leur mouvement centripète M2.

L'entretoise 6 est interposée entre les segments 21, 22 pour limiter leur mouvement centripète, et comprend deux éléments filetés 61, 62 formant une liaison vis-écrou, la longueur de cette entretoise étant ajustée, au fur et à mesure que les garnitures de friction 21a, 22a s'usent, par dévissage de la liaison vis-écrou par l'intermédiaire de la roue dentée 7, cette roue étant solidaire d'un des éléments 61 de la liaison vis-écrou, et étant sélectivement entraînée en rotation par la lame de réglage 51 lors du pivotement du levier basculant 5 dans le premier sens.

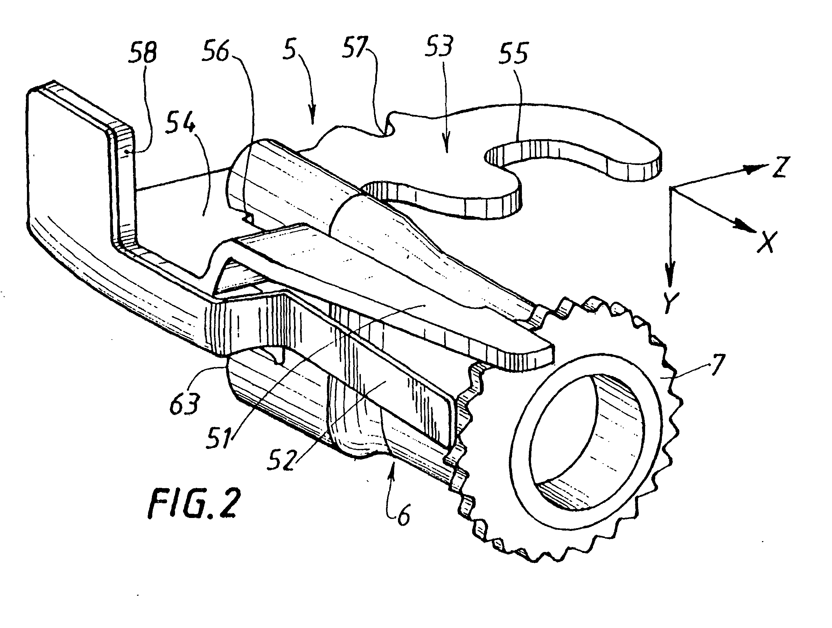

Comme le montre la figure 2, qui pour des raisons de clarté inclut un repère orthonormé XYZ, la lame de réglage 51 s'étend, en longueur, suivant la direction X, c'est-à-dire transversalement par rapport au plan YZ de la roue dentée, et se développe en largeur dans un plan moyen XZ parallèle au mouvement de pivotement du levier 5.

La lame de réglage 51 est par ailleurs disposée de manière à aborder la roue dentée 7, lors du pivotement du levier 5 dans le premier sens, de façon relativement plus tangentielle que radiale.

Comme indiqué précédemment, les freins connus de ce type sont sensibles à certaines conditions limites de fonctionnement et peuvent se bloquer en cas d'actionnement intense provoquant une déformation du tambour, s'accompagnant le plus souvent d'une élévation anormale de température.

Pour éviter ce défaut, le frein de l'invention se distingue essentiellement du frein connu d'une part par le fait que le levier 5 porte une lame d'inhibition 52 qui s'étend en longueur parallèlement à la lame de réglage 51, qui se développe en largeur dans un plan XY sensiblement perpendiculaire au plan moyen XZ de la lame de réglage 51, qui est flexible transversalement par rapport à son plan, qui adopte dans son plan XY une position de repos dont elle peut s'écarter élastiquement par des débattements d'amplitude limitée dans le sens de sa largeur, et qui intercepte sélectivement la roue dentée 7, et d'autre part par le fait que la lame de réglage 51 suit les débattements de la lame d'inhibition 52, la roue dentée 7 échappant ainsi à la lame de réglage 51 lorsqu'elle entraîne la lame d'inhibition 52 après avoir été interceptée par cette lame d'inhibition 52.

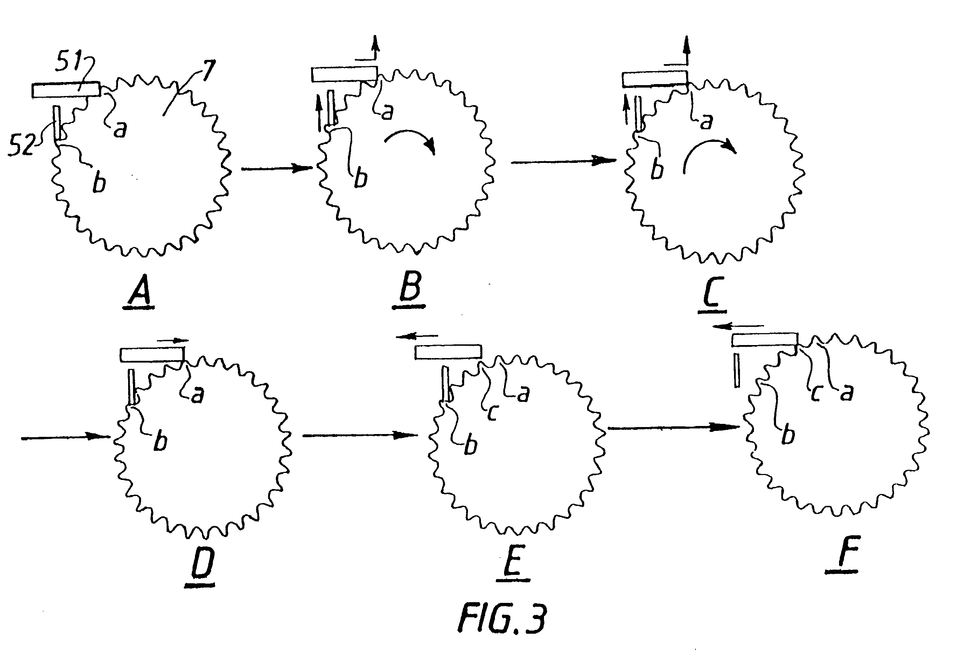

Les figures 3A à 3F illustrent le fonctionnement du frein de l'invention, en l'occurrence considéré comme incluant une caractéristique additionnelle très avantageuse bien que non indispensable, selon laquelle la lame d'inhibition 52 est constituée par un bilame de manière à pouvoir se rapprocher de la roue dentée 7, par un mouvement transversal par rapport à son plan XY, lors d'une élévation de température.

On utilisera dorénavant les conventions de langage suivantes.

"Frein dégonflé" désigne l'état du frein au repos, les segments 21 et 22 étant rapprochés l'un de l'autre par le ressort 4.

"Frein gonflé" désigne l'état du frein en cours d'actionnement, les segments 21 et 22 étant écartés l'un de l'autre et appliqués contre la face interne la du tambour 1 par l'actionneur 3.

"Prendre une dent" ou "engrener une dent" désignent l'action par laquelle la lame de réglage 51 passe d'une dent de la roue à la dent suivante, lors du dégonflage du frein.

"J" désigne le jeu fonctionnel du frein, c'est-à-dire le jeu diamétral séparant le tambour des garnitures 21a, 22a, lorsque le frein est dégonflé.

"Jo" désigne le jeu fonctionnel nominal du frein, c'est-à-dire le jeu fonctionnel pour lequel le frein a été dimensionné.

"Normale" et "élevée" désignent respectivement les températures pour lesquelles le bilame qui constitue la lame d'inhibition dans le mode de réalisation particulier illustré à la figure 3 adopte sa configuration de base et sa configuration déformée.

Les différentes vues 3A à 3F de la figure 3 correspondent aux états suivants.

Vue 3A : Frein dégonflé. Température élevée. La lame de réglage 51 est en position de repos après avoir engrené la dent 'a'. La lame d'inhibition 52 est dans sa configuration déformée et en appui sur la dent 'b'.

Vue 3B : Frein gonflé. Température élevée. La lame de réglage 51 se déplace d'une distance correspondant au jeu "J". En raison de la rotation de la roue dentée 7 par la lame de réglage 51, la dent 'b' soulève la lame d'inhibition 52. La lame de réglage 51, qui suit le mouvement de la lame d'inhibition 52, se soulève à son tour.

Vue 3C : Frein gonflé. Température élevée. La lame de réglage 51 se déplace tout en se soulevant, en suivant le déplacement vertical de la lame d'inhibition 52 qui est soulevée par la roue 7. La dent 'a' de la roue 7 échappe à la lame de réglage 51.

Vue 3D : Frein gonflé. Température élevée. J > Jo. La lame de réglage 51, soulevée en même temps que la lame d'inhibition 52, se déplace tangentiellement à la roue 7 et glisse sur le sommet de la dent 'a' sans entraîner cette dent, dont elle s'est désengagée dès l'étape illustrée par la vue 3C.

Vue 3E : Frein dégonflé. Température élevée. J > Jo. La lame de réglage 51 revient en position de repos. La lame d'inhibition 52 reste en appui sur la dent 'b', empêchant la lame de réglage 51 de prendre la dent 'c'.

Vue 3F : Frein dégonflé. Température normale. En se refroidissant, la lame d'inhibition 52 perd son appui sur la dent 'b'. Soit la lame de réglage 51 s'est désengagée de la dent 'a' pour un jeu J < Jo, auquel cas la roue dentée 7 n'a pas suffisamment tourné pour provoquer la prise de la dent 'c' lorsque la lame de réglage 51 revient et reste sur cette dent 'c', soit la lame de réglage 51 s'est désengagée de la dent 'a' pour un jeu J ≥ Jo, auquel cas la roue dentée 7 a pris la dent 'c' mais uniquement celle-là.

Bien que la description ci-dessus se réfère à un mode de réalisation relativement avancé en ce sens qu'il exploite la possibilité de déplacement de la lame d'inhibition, transversalement par rapport à son plan, sous l'effet d'une élévation de la température, il est également possible d'utiliser une lame d'inhibition 52 simple et non déformable en température, pour éviter certains surréglages du frein qui sont provoqués par une déformation radiale anormale du tambour 1 sous l'effet d'une sollicitation mécanique excessive.

Il est courant en effet que, dans de telles conditions, les freins connus opèrent un réglage de jeu par sauts de plusieurs dents à la fois, ce qui peut parfois conduire à un blocage du frein, même en l'absence d'échauffement.

Or, comme la lame d'inhibition 52 se déplace, dans le cas où elle accompagne un mouvement de la lame de réglage, de la même façon qu'elle se déplace dans le cas d'un échauffement, il suffit, comme le comprendra aisément l'homme de l'art, d'utiliser l'enseignement de la description ci-dessus pour réaliser un frein dans lequel, dès que la lame de réglage 51 et la lame d'inhibition 52 ont parcouru une course autorisant la lame de réglage 51 à prendre une nouvelle dent, la lame d'inhibition intercepte la roue 7 pour interdire à la lame de réglage 51 la prise de toute dent supplémentaire, comme précédemment illustré.

Selon un autre aspect de l'invention, illustré à la figure 2, le levier 5 présente par exemple une branche 53 disposée en équerre par rapport à la lame de réglage 51 et rattachée à elle par une base commune 54.

La branche 53 est d'une part montée pivotante, par une extrémité 55 distante de la base 54, sur l'axe 8 solidaire du segment 21, et d'autre part montée pivotante, par une extrémité 56 adjacente à la base 54, sur une extrémité 63 de l'entretoise 6.

Par ailleurs, le ressort 4 servant à rapprocher l'un de l'autre les segments 21 et 22 prend avantageusement appui sur un point 57 de la branche 53, intermédiaire entre les extrémités 55 et 56 de cette branche 53, de manière que le pivotement du levier 5 soit directement obtenu par les mouvements dés segments 21 et 22, de façon connue en soi (voir figure 1).

Enfin, le levier 5 présente par exemple un rabat 58, adjacent à la base 54 commune à la lame de réglage 51 et à la branche 53, parallèle au plan XY de la lame d'inhibition 52, et duquel la lame d'inhibition 52 est rendue solidaire.

## Revendications

1. Frein à tambour comprenant au moins : un tambour (1); deux segments en arc de cercle (21, 22) disposés en regard d'une face interne (1a) du tambour (1) et portant des garnitures de friction respectives (21a, 22a); un actionneur (3) interposé entre les segments (21, 22) et sélectivement commandé pour déplacer les segments, suivant un mouvement centrifuge (M1), en direction de la face interne (1a) du tambour; un ressort (4) reliant les segments (21, 22) pour les rapprocher l'un de l'autre, suivant un mouvement centripète (M2) contraire au mouvement centrifuge, dès que l'actionneur (3) cesse d'être commandé; un levier basculant (5) portant une lame de réglage (51) et animé d'un mouvement angulaire alternatif constitué de deux pivotements de directions contraires, corrélés aux mouvements centrifuge et centripète des segments; une entretoise (6) de longueur réglable, interposée entre les segments (21, 22) pour limiter leur mouvement centripète, et comprenant deux éléments filetés (61, 62) formant une liaison vis-écrou, la longueur de cette entretoise étant ajustée par dévissage de la liaison vis-écrou au fur et à mesure que les garnitures de friction (21a, 22a) s'usent; et une roue dentée (7), solidaire d'un des éléments (61) de la liaison vis-écrou, et sélectivement entraînée en rotation par la lame de réglage (51) lors d'un premier des pivotements du levier basculant (5), la lame de réglage (51) s'étendant, en longueur, transversalement par rapport à la roue dentée, se développant en largeur dans un plan moyen (XZ) parallèle au premier pivotement, et abordant la roue dentée (7), lors du premier pivotement, de façon relativement plus tangentielle que radiale, le levier (5) portant une lame d'inhibition (52) s'étendant en longeur parallèlement à la lame de réglage (51), flexible transversalement par rapport à son plan adoptant dans son plan (XY) une position de repos dont elle peut s'écarter élastiquement par des débattements d'amplitude limitée suivant sa largeur, et interceptant sélectivement la roue dentée (7), la lame de réglage (51) suivant les débattements de la lame d'inhibition (52), **caractérisé en ce que** ladite lame d'inhibition (52) se développe en largeur dans un plan (XY) sensiblement perpendiculaire au plan moyen (XZ) de la lame de réglage (51), et **en ce que** la roue dentée (7) échappe à la lame de réglage (51) lorsqu'elle entraîne la lame d'inhibition (52) après avoir été interceptée par cette lame d'inhibition (52).

2. Frein à tambour suivant la revendication 1, **caractérisé en ce que** la lame d'inhibition (52) est constituée par un bilame et **en ce qu'**elle se rapproche de la roue dentée (7), par un mouvement transversal par rapport à son plan (XY), lors d'une élévation de température.

3. Frein à tambour suivant la revendication 1 ou 2, **caractérisé en ce que** le levier (5) présente une branche (53) disposée en équerre par rapport à la lame de réglage (51) et rattachée à elle par une base commune (54), **en ce que** cette branche (53) est montée pivotante, par une extrémité (55) distante de la base (54), sur un axe (8) solidaire d'un des segments (21), **en ce que** la branche (53) est montée pivotante, par une extrémité (56) adjacente à la base (54), sur une extrémité (63) de l'entretoise (6), et **en ce que** le ressort (4) prend appui sur un point (57) de la branche (53), intermédiaire entre les extrémités (55, 56) de cette branche (53).

4. Frein à tambour suivant la revendication 3, **caractérisé en ce que** le levier (5) présente un rabat (58), adjacent à la base (54) commune à la lame de réglage (51) et à la branche (53), parallèle au plan (XY) de la lame d'inhibition (52), et duquel la lame d'inhibition (52) est rendue solidaire.

## Claims

1. Drum brake comprising at least: a drum (1); two shoes (21, 22) in the shape of arcs of a circle, arranged facing an internal face (1a) of the drum (1) and carrying respective friction linings (21a, 22a); an actuator (3) inserted between the shoes (21, 22) and operated selectively to make the shoes move, in a centrifugal movement (M1) towards the internal face (1a) of the drum; a spring (4) connecting the shoes (21, 22) to move them closer together, in a centripetal movement (M2) counter to the centrifugal movement as soon as the actuator (3) is no longer being operated; a rocking lever (5) carrying an adjustment blade (51) and which moves in a back and forth angular movement consisting of two pivoting movements in opposite directions, correlated with the centrifugal and centripetal movements of the shoes; an adjustable-length strut (6) inserted between the shoes (21, 22) to limit their centripetal movement, and comprising two threaded elements (61, 62) forming a screw-nut connection, the length of this strut being adjusted by unscrewing the screw-nut connection as the friction linings (21a, 22a) wear; and a toothed wheel (7) secured to one of the elements (61) of the screw-nut connection and selectively rotated by the adjustment blade (51) during a first of the pivoting movements of the rocking lever (5), the adjustment blade (51) extending, lengthwise, transversely with respect to the toothed wheel, developing widthwise in a mean plane (XZ) parallel to the first pivoting movement, and interfacing with the toothed wheel (7), during the first pivoting movement, rather more tangentially than radially, **characterized in that** the lever (5) bears an inhibitor blade (52) extending lengthwise parallel to the adjustment blade (51), flexible transversely with respect to its plane, adopting within its plane (XY) a position of rest from which it can move elastically by limited-amplitude deflections in the direction of its width, and selectively intercepting the toothed wheel (7), the adjustment blade (51) following the deflections of the inhibitor blade (52), **characterized in that** the said inhibitor blade extends widewise in a plane (XY) approximately perpendicular with respect to the mean plane (XZ) of the adjustment blade (51), and
**in that** the toothed wheel (7) escapes the influence of the adjustment blade (51) when it is driving the inhibitor blade (52) after having been intercepted by this inhibitor blade.

2. Drum brake according to Claim 1, **characterized in that** the inhibitor blade (52) consists of a bimetallic element and **in that** it moves closer to the toothed wheel (7) by a movement that is transverse with respect to its plane (XY), when there is a rise in temperature.

3. Drum brake according to Claim 1 or 2, **characterized in that** the lever (5) has a branch (53) arranged at right angles to the adjustment blade (51) and attached to it by a common base (54), **in that** this branch (53) is mounted so that it can pivot, via an end (55) distant from the base (54), on a pin (8) secured to one of the shoes (21), **in that** the branch (53) is mounted so that it can pivot, via an end (56) adjacent to the base (54), on one end (63) of the strut (6), and **in that** the spring (4) bears upon a point (57) of the branch (53) that is part way between the ends (55, 56) of this branch (53).

4. Drum brake according to Claim 3, **characterized in that** the lever (5) has a bent-over part (58) adjacent to the base (54) that is common to the adjustment blade (51) and to the branch (53), that is parallel to the plane (XY) of the inhibitor blade (52), and with which the inhibitor blade (52) is integral.

## Patentansprüche

1. Trommelbremse mit mindestens: einer Trommel (1); zwei Kreisbogensegmenten (21, 22), die gegenüber einer Innenseite (1a) der Trommel (1) angeordnet sind und jeweilige Reibbeläge (21a, 22a) tragen; einer Betätigungsvorrichtung (3), die zwischen die Segmente (21, 22) eingefügt ist und selektiv gesteuert wird, um die Segmente gemäß einer Zentrifugalbewegung (M1) in der Richtung der Innenseite (1a) der Trommel zu verschieben; einer Feder (4), die die Segmente (21, 22) verbindet, um sie gemäß einer Zentripetalbewegung (M2) entgegengesetzt zur Zentrifugalbewegung aneinander anzunähern, sobald die Betätigungsvorrichtung (3) nicht mehr gesteuert wird; einem Kipphebel (5), der eine Einstelllamelle (51) trägt und zu einer abwechselnden Winkelbewegung angeregt wird, die aus zwei Schwenkbewegungen in entgegengesetzten Richtungen besteht, die mit der Zentrifugal- und Zentripetalbewegung der Segmente korreliert sind; einer Querstrebe (6) mit einer einstellbaren Länge, die zwischen die Segmente (21, 22) eingefügt ist, um ihre Zentripetalbewegung zu begrenzen, und mit zwei Gewindeelementen (61, 62), die eine Schrauben-Mutter-Verbindung bilden, wobei die Länge dieser Querstrebe durch Aufschrauben der Schrauben-Mutter-Verbindung eingestellt wird in dem Maße, wie die Reibbeläge (21 a, 22a) sich abnutzen; und einem Zahnrad (7), das mit einem der Elemente (61) der Schrauben-Mutter-Verbindung fest verbunden ist und durch die Einstelllamelle (51) bei einer ersten der Schwenkbewegungen des Kipphebels (5) selektiv zu einer Drehung mitgenommen wird, wobei sich die Einstelllamelle (51) in der Länge quer bezüglich des Zahnrades erstreckt, sich in der Breite in einer Mittelebene (XZ), die zur ersten Schwenkbewegung parallel ist, entwickelt, und an das Zahnrad (7) bei der ersten Schwenkbewegung in einer mehr tangentialen als radialen Weise anstößt, wobei der Hebel (5) eine Sperrlamelle (52) trägt, die sich in der Länge parallel zur Einstelllamelle (51) erstreckt, bezüglich ihrer Ebene quer flexibel ist und in ihrer Ebene (XY) eine Ruhestellung einnimmt, aus der sie sich elastisch durch Bewegungswege mit begrenzter Amplitude entlang ihrer Breite entfernen kann und selektiv das Zahnrad (7) aufhält, wobei die Einstelllamelle (51) den Auslenkungen der Sperrlamelle (52) folgt, **dadurch gekennzeichnet, daß** sich die Sperrlamelle (52) in der Breite in einer Ebene (XY) entwickelt, die zur Mittelebene (XZ) der Einstelllamelle (51) im wesentlichen senkrecht ist, und daß das Zahnrad (7) von der Einstelllamelle (51) freikommt, wenn es die Sperrlamelle (52) mitnimmt, nachdem es durch diese Sperrlamelle (52) aufgehalten wurde.

2. Trommelbremse nach Anspruch 1, **dadurch gekennzeichnet, daß** die Sperrlamelle (52) aus einem Bimetall besteht und daß sie sich dem Zahnrad (7) durch eine Bewegung quer zu ihrer Ebene (XY) bei einer Temperaturerhöhung nähert.

3. Trommelbremse nach Anspruch 1 oder 2, **dadurch gekennzeichnet, daß** der Hebel (5) einen Abschnitt (53) aufweist, der bezüglich der Einstelllamelle (51) in einem Winkel angeordnet ist und an diese durch eine gemeinsame Basis (54) angesetzt ist, daß dieser Abschnitt (53) durch ein von der Basis (54) entferntes Ende (55) schwenkbar an einer Achse (8) angebracht ist, die mit einem der Segmente (21) fest verbunden ist, daß der Abschnitt (53) durch ein zur Basis (54) benachbartes Ende (56) an einem Ende (63) der Querstrebe (6) schwenkbar angebracht ist und daß die Feder (4) an einem Punkt (57) des Abschnitts (53) zwischen den Enden (55, 56) dieses Abschnitts (53) anliegt.

4. Trommelbremse nach Anspruch 3, **dadurch gekennzeichnet, daß** der Hebel (5) ein abgebogenes Teil (58) benachbart zur mit der Einstelllamelle (51) und dem Abschnitt (53) gemeinsamen Basis (54) parallel zur Ebene (XY) der Sperrlamelle (52) aufweist, mit welchem die Sperrlamelle (52) fest verbunden ist.
